# EUROPÄISCHE PATENTSCHRIFT

(11) **EP 2 681 015 B1**
(45) Veröffentlichungstag und Bekanntmachung des Hinweises auf die Patenterteilung: **28.12.2016**
(21) Anmeldenummer: 12711756.2
(22) Anmeldetag: 02.03.2012
(51) Int. Cl.: B25J 9/10, F16H 57/027

(54) **ROBOTERGETRIEBE MIT EINER DRUCKAUSGLEICHSEINRICHTUNG**
ROBOT TRANSMISSION WITH A PRESSURE COMPENSATION DEVICE
TRANSMISSION DE ROBOT DOTÉE D'UN DISPOSITIF DE COMPENSATION DE PRESSION

(30) Priorität: 02.03.2011 DE 102011012809
(43) Veröffentlichungstag der Anmeldung: 08.01.2014
(73) Patentinhaber: Dürr Systems AG, 74321 Bietigheim-Bissingen (DE)
(72) Erfinder: COLLMER, Andreas, 71665 Vaihingen (DE); HEZEL, Thomas, 71679 Asperg (DE)
(74) Vertreter: Beier, Ralph
(86) Internationale Anmeldenummer: PCT/EP2012/000944
(87) Internationale Veröffentlichungsnummer: WO 2012/116836

(56) Entgegenhaltungen:
- DD-A1- 280 369
- DE-A1-102006 060 865
- DE-A1-102007 026 338
- DE-T2- 60 005 824
- JP-A- 7 310 808
- JP-A- 2006 038 019

## Beschreibung

Die Erfindung betrifft einen mehrachsigen Roboter, insbesondere einen Lackierroboter oder einen Handhabungsroboter einer Lackieranlage zur Lackierung von Kraftfahrzeugkarosseriebauteilen.

In modernen Lackieranlagen zur Lackierung von Kraftfahrzeugkarosseriebauteilen werden mehrachsige Roboter eingesetzt und zwar zum einen als Lackierroboter zur Lackapplikation und zum anderen als Handhabungsroboter (z.B. Haubenöffner, Türöffner) zur Handhabung der zu lackierenden Bauteile. Derartige Roboter weisen zur Bewegung der einzelnen Roboterachsen mehrere Robotergetriebe auf, die üblicherweise durch Öl geschmiert werden. Hierzu wird das Getriebegehäuse des jeweiligen Robotergetriebes teilweise mit Öl gefüllt.

Einerseits muss der Ölstand hierbei innerhalb des Getriebegehäuses so hoch sein, dass sich alle zu schmierenden Bauteile unterhalb des Ölstandes befinden und deshalb ausreichend geschmiert werden.

Andererseits muss der Ölstand innerhalb des geschlossenen Getriebegehäuses so niedrig sein, dass oberhalb des Ölstandes in dem Getriebegehäuse noch ein ausreichendes Gasvolumen verbleibt, um bei einer betriebsbedingten Erwärmung des Öls eine Ausdehnung des Öls in dem Getriebegehäuse zu ermöglichen. Es ist deshalb aus dem Stand der Technik bekannt, dass das Getriebegehäuse bei derartigen Robotergetrieben nur zu 80% mit Öl gefüllt wird, so dass 20% des Getriebegehäuses mit Luft gefüllt bleiben, um eine Ausdehnung des Öls zu ermöglichen. Dies ist wichtig, weil Druckerhöhungen aufgrund von thermischen Ausdehnungen des Öls zu Undichtigkeiten des Getriebegehäuses führen können, da die Getriebedichtungen nur sehr geringen Überdrücken standhalten.

Problematisch an dieser Teilbefüllung des Getriebegehäuses ist die Tatsache, dass sich bei einer Änderung der räumlichen Lage des Robotergetriebes möglicherweise nicht mehr alle zu schmierenden Bauteile unterhalb des Ölstandes befinden, wodurch die Schmierung beeinträchtigt wird. Dieses Problem ist insbesondere bei einem Robotergetriebe gravierend, da sich bei einem hochbeweglichen mehrachsigen Roboter die räumliche Lage des Robotergetriebes im Betrieb permanent ändert, so dass eine Teilbefüllung des Getriebegehäuses zu einer ungenügenden Schmierung führt.

Eine mögliche Lösung dieses Problems besteht darin, von einer Ölschmierung auf eine Fettschmierung überzugehen, was jedoch aus technischer Sicht nicht immer möglich ist.

Eine andere mögliche Lösung dieses Problems besteht darin, den Füllstand des Öls in dem Getriebegehäuse zu erhöhen, so dass unabhängig von der räumlichen Lage des Robotergetriebes stets sämtliche zu schmierenden Bauteile unterhalb des Ölstandes liegen. Der Ölstand in dem Getriebegehäuse lässt sich jedoch nicht beliebig erhöhen, da das verbleibende Luftvolumen in dem geschlossenen Getriebegehäuse ausreichen muss, um thermisch bedingte Ausdehnungen des Öls zu ermöglichen.

Zwar sind aus dem Stand der Technik Druckausgleichsbehälter bekannt, die als geschlossenes System ausgebildet sind und mit dem Getriebegehäuse verbunden werden können, um einen Druckausgleich zu ermöglichen, was dann auch eine vollständige Befüllung des Getriebegehäuses mit einem Öl ermöglichen würde. Derartige Druckausgleichsbehälter weisen in der Regel ein nachgiebiges Trennelement (z.B. eine Membran) auf, die in dem Druckausgleichsbehälter eine Schmiermittelseite von einer Gasseite trennt. Die Schmiermittelseite des Druckausgleichsbehälters ist hierbei fluidisch mit dem Getriebegehäuse verbunden, so dass sich das in dem Getriebegehäuse befindliche Öl bei einer Erwärmung in die Schmiermittelseite des Druckausgleichsbehälters hinein ausdehnen kann, wobei sich das nachgiebige Trennelement entsprechend verformt. Das Innenvolumen des geschlossenen Druckausgleichsbehälters muss hierbei auf der Gasseite ausreichend groß sein, damit bei einer thermisch bedingten Ausdehnung des Öls kein zu großer Gegendruck auf der Gasseite aufgebaut wird, der das bauartbedingte Druckmaximum des Getriebegehäuses überschreiten würde. So darf der Öldruck in dem Getriebegehäuse beispielsweise einen Druckwert von 0,3 bar nicht überschreiten, woraus sich unter Berücksichtigung einer Sicherheit von 0,2 bar ein Druckmaximum von 0,1 bar ergibt. Mit den bekannten geschlossenen Druckausgleichsbehältern ließe sich dies nur erreichen, wenn das Innenvolumen des Druckausgleichsbehälters auf der Gasseite mindestens 1000 cm³ beträgt. Die daraus resultierende Baugröße des Druckausgleichsbehälters verhindert jedoch einen Einsatz bei einem Robotergetriebe eines Lackier- oder Handhabungsroboters, da der zur Verfügung stehende Bauraum hierfür nicht ausreicht. Die Verwendung eines geschlossenen Druckausgleichsbehälters eignet sich also ebenfalls nicht zur Lösung des vorstehend erwähnten Problems der thermisch bedingten Ausdehnung des Öls.

Darüber hinaus sind bei stationären oder quasistationären Getrieben Druckausgleichseinrichtungen bekannt, die einen Überdruck in dem Getriebegehäuse vermeiden. Derartige Druckausgleichseinrichtungen bestehen beispielsweise aus Entlüftungen mit einer Vorrichtung (z.B. Filter, Rückschlagventil), die den Eintritt von Schmutz in das Getriebegehäuse verhindert. Derartige Druckausgleichseinrichtungen eignen sich jedoch nicht für Robotergetriebe, bei denen die räumliche Lage im Betrieb starken Schwankungen unterliegt.

Aus DE 600 05 824 T2 ist ein Industrieroboter mit einem Getriebegehäuse bekannt, wobei das Getriebegehäuse einfache Belüftungsöffnungen aufweist, so dass sich das Problem eines Überdrucks in dem Getriebegehäuse überhaupt nicht stellt. Allerdings besteht hierbei die Gefahr, dass Getriebeöl durch die Belüftungsöffnungen austritt und die Umgebung verunreinigt. Dies wäre insbesondere bei einem Einsatz als Lackierroboter störend, da Verunreinigungen bei einem Lackiervorgang unbedingt verhindert werden müssen. Dieser bekannte Industrieroboter wird deshalb nicht als Lackierroboter eingesetzt.

Ferner ist zum Stand der Technik hinzuweisen auf DE 39 23 530 A1, DE 10 2006 060 865 A1 und DE 10 2007 026 338 A1.

Darüber hinaus ist zum Stand der Technik hinzuweisen auf JP-A-2006 038019, DE-T2-600 05 824, DD-A1-280 369 und DE-A1-2006 060865.

Schließlich offenbart JP-A-07 310808 einen Roboter mit einem Robotergetriebe, wobei dem Robotergetriebe eine eigene Druckausgleichseinrichtung zugeordnet ist. Dies ist jedoch bei einem Roboter mit mehreren Robotergetrieben äußerst aufwändig, da jedes Robotergetriebe eine separate Druckausgleichseinrichtung benötigt.

Der Erfindung liegt deshalb die Aufgabe zugrunde, einen entsprechend verbesserten Roboter zu schaffen.

Diese Aufgabe wird durch einen erfindungsgemäßen Roboter gemäß dem Hauptanspruch gelöst.

Die Erfindung sieht einen Roboter mit mehreren Robotergetrieben und einer Druckausgleichseinrichtung vor, die einen Druckausgleich in den jeweiligen Getriebegehäusen ermöglicht und dadurch verhindert, dass der Schmiermitteldruck in den Getriebegehäusen das Druckmaximum überschreitet. Die Druckausgleichseinrichtung weist vorzugsweise einen Druckausgleichsbehälter auf, der als offenes System ausgebildet ist und einen Gasaustausch mit der Umgebung ermöglicht. Dies bietet den Vorteil, dass das Innenvolumen des Druckausgleichsbehälters auf der Gasseite wesentlich kleiner sein kann, so dass sich die Baugröße des Druckausgleichsbehälters entsprechend verringern lässt. Die geringere Baugröße von Druckausgleichsbehältern, die als offenes System ausgebildet sind, ermöglicht vorteilhaft die bauliche Integration in einen mehrachsigen Roboter. Im Gegensatz dazu ließen sich die aus dem Stand der Technik an sich bekannten geschlossenen Druckausgleichsbehälter aufgrund ihrer Baugröße nicht bei mehrachsigen Robotern einsetzen.

Die Druckausgleichseinrichtung des erfindungsgemäßen Roboters weist also vorzugsweise einen Druckausgleichsbehälter auf, der fluidisch mit den Getriebegehäusen verbunden ist und in den sich das Schmiermittel bei einer Erwärmung ausdehnen kann. Beispielsweise kann der Druckausgleichsbehälter direkt mit den Getriebegehäusen verschraubt sein. Es besteht jedoch auch die Möglichkeit, dass der Druckausgleichsbehälter von den Getriebegehäusen getrennt und mit den Getriebegehäusen lediglich durch eine Leitung fluidisch verbunden ist. Vorzugsweise ist der Druckausgleichsbehälter jedoch unmittelbar an den Getriebegehäusen angeordnet, um das Leitungsvolumen zwischen den Getriebegehäusen und dem Druckausgleichsbehälter möglichst klein zu halten.

Der Druckausgleichsbehälter weist vorzugsweise ein nachgiebiges Trennelement (z.B. eine elastische Membran) auf, das in dem Druckausgleichsbehälter eine Schmiermittelseite von einer Gasseite trennt und die Schmiermittelseite gegenüber der Gasseite abdichtet. Die Schmiermittelseite des Druckausgleichsbehälters ist hierbei fluidisch mit dem Getriebegehäuse verbunden, so dass sich das in dem Getriebegehäuse befindliche Schmiermittel bei einer Erwärmung in die Schmiermittelseite des Druckausgleichsbehälters hinein ausdehnen kann. Im Betrieb ist also vorzugsweise sowohl das Getriebegehäuse als auch die Schmiermittelseite des Druckausgleichsbehälters vollständig mit dem Schmiermittel gefüllt, wobei thermisch bedingte Ausdehnungen des Schmiermittels durch eine entsprechende Bewegung des nachgiebigen Trennelements kompensiert werden. Die Gasseite des Druckausgleichsbehälters ist dagegen - anders als bei dem eingangs beschriebenen bekannten geschlossen Druckausgleichsbehälter - mit der Umgebung verbunden, was einen Gasaustausch zwischen der Gasseite des Druckausgleichsbehälters und der Umgebungsatmosphäre ermöglicht.

Bei einer thermisch bedingten Ausdehnung des Schmiermittels wird das nachgiebige Trennelement in dem Druckausgleichsbehälter also in Richtung der Gasseite verformt, wobei Luft aus der Gasseite des Druckausgleichsbehälters nach außen in die Umgebung abgegeben wird.

Bei einer anschließenden Abkühlung des Schmiermittels zieht sich das Schmiermittel wieder zusammen, was zu einer entsprechenden Bewegung des nachgiebigen Trennelements in Richtung der Schmiermittelseite führt, wobei Luft von der Umgebungsseite in die Gasseite des Druckausgleichsbehälters eingesogen wird.

Vorteilhaft an dieser offenen Gestaltung des Druckausgleichsbehälters ist die Tatsache, dass die Ausdehnung des Schmiermittels nicht zu einem entsprechenden Gegendruck auf der Gasseite des Druckausgleichsbehälters führt, weil ein Druckausgleich mit der Umgebungsatmosphäre möglich ist. Im Betrieb treten deshalb über einen relativ großen Temperaturbereich (z.B. 10°C-80°C) des Schmiermittels kaum Überdrücke innerhalb des Getriebegehäuses auf, wodurch überdruckbedingte Undichtigkeiten in dem Getriebegehäuse verhindert werden.

In dem bevorzugten Ausführungsbeispiel der Erfindung weist der Druckausgleichsbehälter auf der Gasseite eine Außenöffnung auf, über welche die Gasseite des Druckausgleichsbehälters mit der Umgebungsatmosphäre in Verbindung steht. Hierbei ist die Außenöffnung des Druckausgleichsbehälters vorzugsweise durch ein Druckausgleichselement verschlossen, wobei das Druckausgleichselement gasdurchlässig ist, um einen Gasaustausch zwischen der Gasseite des Druckausgleichsbehälters und der Umgebungsatmosphäre zu ermöglichen. Allerdings ist das Druckausgleichselement in der Außenöffnung des Druckausgleichsbehälters für das Schmiermittel vorzugsweise undurchlässig, um eine Leckage des Schmiermittels auch bei einem Versagen des Trennelements zwischen der Schmiermittelseite und der Atmosphärenseite des Druckausgleichsbehälters zu vermeiden. Falls also das nachgiebige Trennelement in dem Druckausgleichsbehälter zwischen der Schmiermittelseite und der Gasseite versagt, so kommt es zu einer Leckage des Schmiermittels von der Schmiermittelseite in die Gasseite des Druckausgleichsbehälters. Das Druckausgleichselement in der Außenöffnung des Druckausgleichsbehälters verhindert dann jedoch, dass das Schmiermittel aus dem Druckausgleichsbehälter austritt. Im Ergebnis weist der Druckausgleichsbehälter in diesem Ausführungsbeispiel also eine doppelte Leckagesicherheit auf.

Vorzugsweise ist das Druckausgleichselement hierbei so beschaffen, dass eine leckagebedingte Schmiermittelbeaufschlagung an dem Druckausgleichselement von außen visuell erkennbar ist. Dies ermöglicht durch eine einfache Sichtprüfung eine Kontrolle des ordnungsgemäßen Zustands des nachgiebigen Trennelements in dem Druckausgleichsbehälter. Beispielsweise kann das Druckausgleichselement in der Außenöffnung des Druckausgleichsbehälters hierzu als eine elastische Membran ausgebildet sein, die aus einem Gewebe bestehen kann. Hierbei besteht die Möglichkeit, dass die Membran durchsichtig ist, so dass eine leckagebedingte Schmiermittelbeaufschlagung der Membran visuell erkennbar ist, um eine einfache Sichtprüfung zu ermöglichen.

Weiterhin ist zu erwähnen, dass das Druckausgleichselement in der Außenöffnung des Druckausgleichsbehälters vorzugsweise bidirektional gasdurchlässig ist, um sowohl bei einer Abkühlung des Schmiermittels als auch bei einer Erwärmung des Schmiermittels einen Druckausgleich zu ermöglichen, indem ein Gasaustausch mit der Umgebung erfolgt.

Das Trennelement in dem Druckausgleichsbehälter zwischen der Schmiermittelseite und der Gasseite kann beispielsweise eine elastische Membran sein, die vorzugsweise ebenfalls bidirektional nachgiebig ist, um sowohl bei einer Abkühlung des Schmiermittels als auch bei einer Erwärmung des Schmiermittels einen Druckausgleich zu ermöglichen.

Das Druckausgleichsvermögen des Druckausgleichsbehälters ist hierbei durch die maximale Verformung des nachgiebigen Trennelements in dem Druckausgleichsbehälter beschränkt. So weist das Trennelement in dem Druckausgleichsbehälter bauartbedingt ein bestimmtes maximales Hubvolumen auf, da sich beispielsweise eine elastische Membran nicht beliebig weit auslenken lässt. Darüber hinaus weist das Schmiermittel ein temperaturabhängiges Ausdehnungsvolumen auf, das mit der Schmiermitteltemperatur zunimmt. Vorzugsweise ist das Trennelement so beschaffen, dass das Hubvolumen des Trennelements auch bei großen Temperaturen des Schmiermittels größer ist als das Ausdehnungsvolumen des Schmiermittels. Vorzugsweise wird auf diese Weise ein Druckausgleich bis zu einer Schmiermitteltemperatur von 50°C, 60°C, 70°C oder sogar 80°C ermöglicht. Weiterhin ist zu erwähnen, dass das Getriebegehäuse nicht nur empfindlich ist gegenüber Überdrucken, sondern auch gegenüber Unterdrucken. Derartige Unterdrucke können beispielsweise bei einer Abkühlung entstehen, wenn sich das Schmiermittel in dem Getriebegehäuse aufgrund der Abkühlung entsprechend zusammenzieht. Die Druckausgleichseinrichtung verhindert deshalb vorzugsweise auch, dass der Schmiermitteldruck in dem Getriebegehäuse ein bauartbedingtes Druckminimum unterschreitet.

Es wurde bereits vorstehend erwähnt, dass die Getriebegehäuse bei dem erfindungsgemäßen Roboter vorzugsweise vollständig mit dem Schmiermittel gefüllt sind, damit die zu schmierenden Bauteile der Robotergetriebe unabhängig von der räumlichen Lage der Robotergetriebe stets mit dem Schmiermittel bedeckt sind. Die Erfindung beansprucht jedoch auch Schutz für Roboter mit entsprechend gestalteten Robotergetrieben, bei denen das Getriebegehäuse nur teilweise mit dem Schmiermittel gefüllt ist. Beispielsweise kann das Getriebegehäuse zu mindest 85%, 90% oder mindestens 95% mit dem Schmiermittel gefüllt sein, wobei jedoch auch andere Füllungsgrade möglich sind. Weiterhin ist zu erwähnen, dass das bauartbedingte Druckmaximum des Getriebegehäuses bezogen auf einen Atmosphärendruck vorzugsweise kleiner ist als +0,3 bar, +0,2 bar oder +0,1 bar, während das bauartbedingte Druckminimum des Getriebegehäuses bezogen auf einen Atmosphärendruck vorzugsweise größer ist als -0,3 bar, -0,2 bar oder -0,1 bar.

In der vorliegenden Beschreibung wird durchgehend davon ausgegangen, dass es sich bei dem Schmiermittel um ein flüssiges Getriebeöl handelt. Die Erfindung beansprucht jedoch grundsätzlich auch Schutz für andere Typen von Schmiermitteln, was keiner weiteren Begründung bedarf.

Darüber hinaus ist noch zu erwähnen, dass der Druckausgleichsbehälter bei der Druckausgleichseinrichtung vorzugsweise ein Volumen von weniger als 200 cm³, 100 cm³, 50 cm³ oder sogar weniger als 30 cm³ aufweist. Dies ist vorteilhaft, weil der Druckausgleichsbehälter dann aufgrund seiner geringen Baugröße baulich in den Roboter integriert werden kann.

Ferner ist zu bemerken, dass die Druckausgleichseinrichtung vorzugsweise für das Schmiermittel undurchlässig ist, um einen Austritt des Schmiermittels au dem Getriebegehäuse zu vermeiden.

Hierbei ist die Druckausgleichseinrichtung vorzugsweise innerhalb des Roboters angeordnet, beispielsweise in einem Drehgelenk des Roboters. Die Druckausgleichseinrichtung ragt also vorzugsweise nicht über die Außenkontur des Roboters hinaus.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Figuren näher erläutert. Es zeigen:
- Figur 1: eine schematische Darstellung eines Robotergetriebes mit einer Druckausgleichseinrichtung,
- Figuren 2A und 2B: verschiedene Betriebszustände der Druckausgleichseinrichtung,
- Figur 3: eine schematische Darstellung einer erfindungsgemäß mit mehreren Robotergetrieben fluidisch verbundenen Druckausgleichseinrichtung in einem Roboter,

- Figur 4: ein Diagramm zur Verdeutlichung des Druckverlaufs in dem Getriebegehäuse des Robotergetriebes bei einer Änderung der Schmiermitteltemperatur, sowie
- Figur 5: eine Perspektivansicht eines nicht erfindungsgemäßen Lackierroboters, in dem die einzelnen Robotergetriebe Druckausgleichseinrichtungen aufweisen.

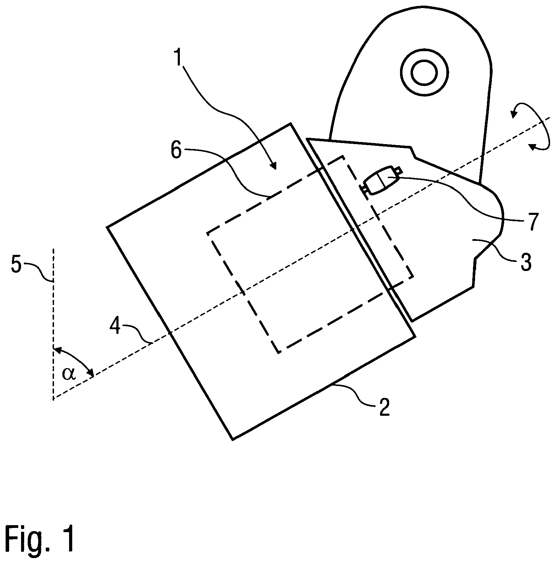

Figur 1 zeigte eine schematische Darstellung eines Robotergetriebes 1 zwischen zwei Achsen 2, 3 eines mehrachsigen Roboters, der in einer Lackieranlage zur Lackierung von Kraftfahrzeugkarosseriebauteilen beispielsweise als Lackierroboter oder als Handhabungsroboter eingesetzt werden kann.

Das Robotergetriebe 1 ermöglicht hierbei eine Drehung der Achse 3 relativ zu der Achse 2 um eine Drehachse 4.

Die Drehachse 4 ist hierbei um einen Winkel α gegenüber einer Senkrechten 5 angewinkelt ist, um zu verdeutlichen, dass im Betrieb verschiedene räumliche Ausrichtungen des Robotergetriebes 1 möglich sind, was für die Schmierung des Robotergetriebes 1 von Bedeutung ist, wie noch detailliert erläutert wird.

Das Robotergetriebe 1 weist ein durch eine gestrichelte Linie dargestelltes Getriebegehäuse 6 auf, das im Betrieb vollständig mit einem Getriebeöl gefüllt ist. Im Betrieb entsteht jedoch in dem Robotergetriebe 1 reibungsbedingt Wärme, was zu einer Erwärmung des Getriebeöls und zu einer entsprechenden Ausdehnung des Getriebeöls führt. Das Getriebegehäuse 6 erlaubt jedoch nur einen geringen Überdruck und auch nur einen geringen Unterdruck, da es ansonsten zu Undichtigkeiten und zu einer Leckage des in dem Getriebegehäuse 6 befindlichen Getriebeöls kommen kann. Unter Berücksichtigung einer ausreichenden Sicherheit weist das Getriebegehäuse 6 deshalb bauartbedingt ein zulässiges Druckmaximum von +0,1 bar und ein zulässiges Druckminimum von -0,1 bar bezogen auf den Atmosphärendruck auf.

Zur Einhaltung dieser Druckwerte ist eine Druckausgleichseinrichtung vorgesehen, die einen Druckausgleichsbehälter 7 umfasst, der mit dem Getriebegehäuse 6 verschraubt und fluidisch mit dem Getriebegehäuse 6 verbunden ist, so dass sich das in dem Getriebegehäuse 6 befindliche Getriebeöl bei einer Erwärmung in den Druckausgleichsbehälter 7 hinein ausdehnen kann.

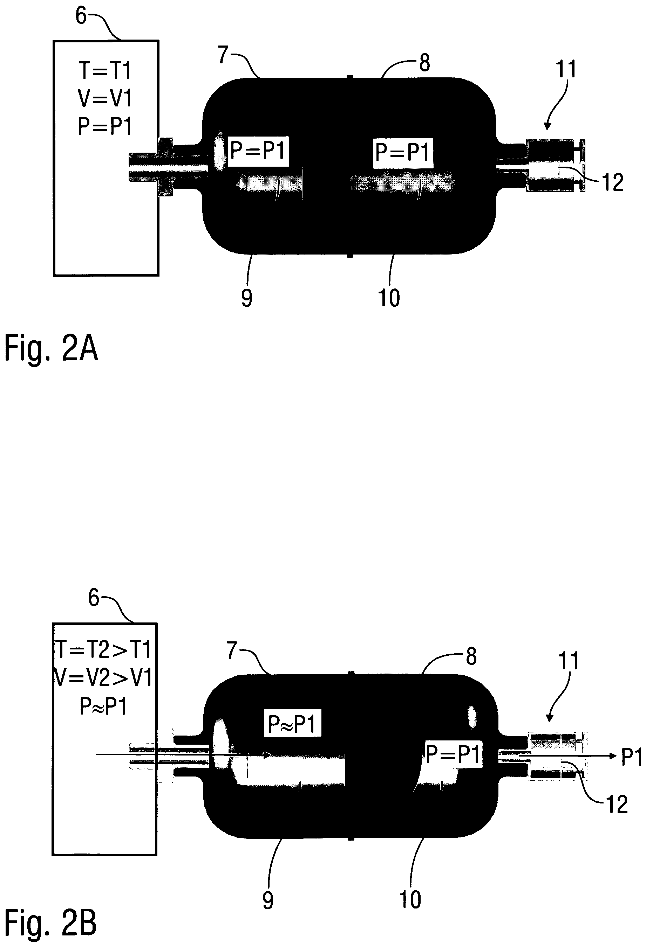

Im Folgenden wird nun unter Bezugnahme auf die Figuren 2A und 2B der genaue Aufbau des Druckausgleichsbehälters 7 und dessen Funktionsweise erläutert.

In dem Druckausgleichsbehälter 7 befindet sich ein nachgiebiges Trennelement 8 in Form einer elastischen Membran, wobei das nachgiebige Trennelement 8 das Innenvolumen des Druckausgleichsbehälters 7 in eine Schmiermittelseite 9 und eine Gasseite 10 unterteilt und dabei die Schmiermittelseite 9 gegenüber der Gasseite 10 abdichtet.

Die Schmiermittelseite 9 des Druckausgleichsbehälters 7 ist hierbei mit dem Getriebegehäuse 6 verbunden, so dass sich das in dem Getriebegehäuse 6 befindliche Getriebeöl bei einer Erwärmung in die Schmiermittelseite 9 des Druckausgleichsbehälters 7 hinein ausdehnen kann.

Die Gasseite 10 des Druckausgleichsbehälters 7 steht dagegen über ein Druckausgleichselement 11 mit der Umgebungsatmosphäre in Verbindung, wobei das Druckausgleichselement 11 einen Gasaustausch zwischen der Gasseite 10 des Druckausgleichsbehälters 7 und der Umgebungsatmosphäre ermöglicht. Hierzu weist das Druckausgleichselement 11 eine Gewebemembran 12 auf, die gasdurchlässig ist, um den vorstehend erwähnten Gasaustausch zwischen der Gasseite 10 des Druckausgleichsbehälters 7 und der Umgebungsatmosphäre zu ermöglichen.

Die Gewebemembran 12 ist jedoch flüssigkeitsundurchlässig, so dass die Gewebemembran 12 bei einem Versagen des nachgiebigen Trennelements 8 in dem Druckausgleichsbehälter 7 und einer Leckage von Schmiermittel von der Schmiermittelseite 9 auf die Gasseite des Druckausgleichsbehälters 7 verhindert, dass das Schmiermittel aus dem Druckausgleichsbehälter 7 austritt. Der Druckausgleichsbehälter 7 bietet also mit dem nachgiebigen Trennelement 8 und mit der Gewebemembran 12 eine doppelte Leckagesicherheit.

Figur 2A zeigt hierbei einen Ausgangszustand der Druckausgleichseinrichtung vor Betriebsbeginn. Das Schmiermittel in dem Getriebegehäuse 6 weist dann eine Schmiermitteltemperatur T = T1 und ein Schmiermittelvolumen V = V1 sowie einen Schmiermitteldruck P = P1 auf. Der Schmiermitteldruck P1 herrscht dann auch in dem Druckausgleichsbehälter 7 sowohl auf der Schmiermittelseite 9 als auch auf der Gasseite 10, wobei der Schmiermitteldruck P1 dem Atmosphärendruck entspricht.

Während des Betriebs steigt die Schmiermitteltemperatur dann auf einen Wert T = T2>T1 an, wie in Figur 2B dargestellt ist. Aufgrund dieser Erwärmung nimmt das Schmiermittelvolumen V zu und erreicht einen Wert V = V2>V1. Das Schmiermittel dehnt sich also in den Druckausgleichsbehälter 7 hinein aus, was zu einer entsprechenden Verformung des flüssigkeitsdichten nachgiebigen Trennelements 8 in Richtung der Gasseite 10 führt. Hierbei erzeugt das nachgiebige Trennelement 8 nur einen vernachlässigbaren Gegendruck, so dass der Schmiermitteldruck P in dem Getriebegehäuse 6 ungefähr bei seinem ursprünglichen Wert P1 bleibt.

Dies liegt auch daran, dass die Verformung des nachgiebigen Trennelements 8 in dem Druckausgleichsbehälter 7 dazu führt, dass Luft aus der Gasseite 10 durch die Gewebemembran 12 des Druckausgleichselements 11 hindurch nach außen abgegeben wird, so dass sich auf der Gasseite 10 des Druckausgleichsbehälters 7 kein Gegendruck aufbaut.

Im Ergebnis ermöglicht die erfindungsgemäße Druckausgleichseinrichtung also einen Druckausgleich, ohne dass sich bleibt deshalb auch bei einer Erwärmung des Robotergetriebes 1 innerhalb der bauartbedingt zulässigen Druckgrenzen.

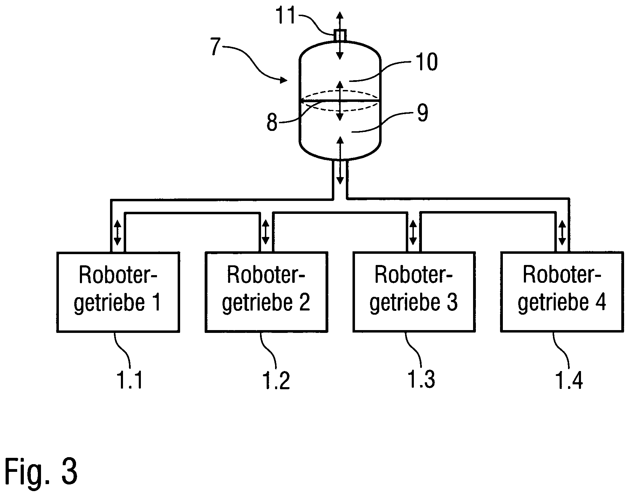

Figur 3 zeigt, dass der Druckausgleichsbehälter 7 mit insgesamt vier Robotergetrieben 1.1-1.4 fluidisch verbunden ist, um in den zugehörigen Getriebegehäusen der einzelnen Robotergetriebe 1.1-1.4 einen Druckausgleich zu bewirken. Hierbei ist der Druckausgleichsbehälter 7 also für mehrere Getriebegehäuse zuständig.

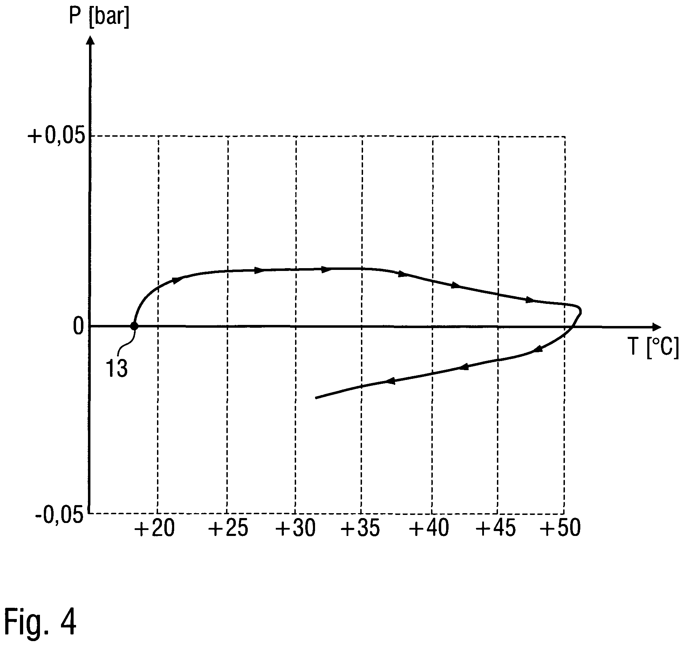

Figur 4 zeigt schematisch den Verlauf des Überdrucks P in dem Getriebegehäuse 6 in Abhängigkeit von der Schmiermitteltemperatur T in dem Getriebegehäuse 6.

Ausgehend von einem Startpunkt 13 mit Umgebungstemperatur und entsprechend keinem Überdruck in dem Getriebegehäuse 6 nimmt die Schmiermitteltemperatur T aufgrund der im Betrieb in dem Robotergetriebe 1 auftretenden Reibung zunächst zu, was auch zu einem entsprechenden Anstieg des Schmiermitteldrucks P in dem Getriebegehäuse 6 führt. Der Anstieg des Schmiermitteldrucks P wird dann jedoch durch die erfindungsgemäße Druckausgleichseinrichtung auf einen akzeptablen Wert begrenzt, der weit unter dem bauartbedingten Druckmaximum P_{MAX} = 0,1 bar liegt. Nach einem Abschalten des Roboters sinkt die Schmiermitteltemperatur T dann wieder ab, was zu einer entsprechenden Abnahme des Schmiermitteldrucks P führt. Auch hierbei bemitteltemperatur T dann wieder ab, was zu einer entsprechenden Abnahme des Schmiermitteldrucks P führt. Auch hierbei begrenzt die erfindungsgemäße Druckausgleichseinrichtung jedoch die Druckabnahme, so dass das bauartbedingte Druckminimum P_{MIN} = -0,1 bar nicht unterschritten wird.

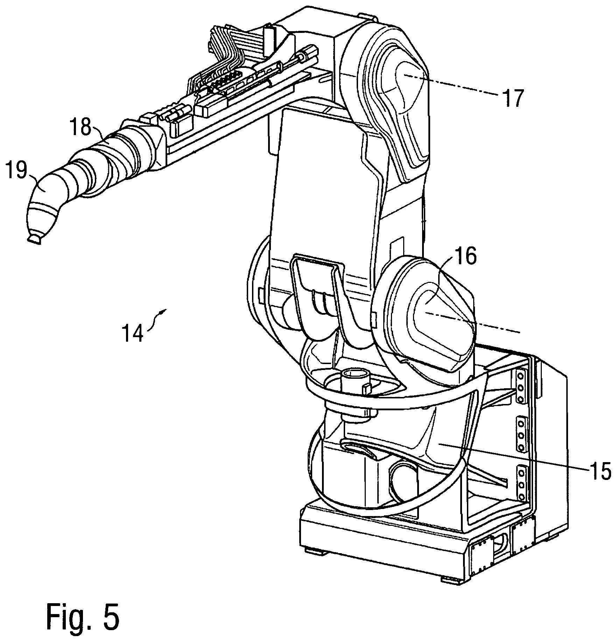

Figur 5 zeigt eine Perspektivansicht eines Lackierroboters 14 mit mehreren beweglichen Achsen 15, 16, 17, einer Roboterhandachse 18 und einem Rotationszerstäuber 19 als Applikationsgerät.

Die einzelnen Achsen 15-17 sind hierbei durch nicht dargestellte Robotergetriebe angetrieben, wobei die einzelnen Robotergetriebe Druckausgleichseinrichtungen aufweisen, wie sie vorstehend beschrieben wurden.

Hinsichtlich der weiteren Details und der Funktionsweise des Lackierroboters 14 wird auf die Patentanmeldung DE 10 2008 037 035 A1 verwiesen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den durch die Ansprüche definierten Schutzbereich fallen.

### Bezugszeichenliste:

- 1: Robotergetriebe
- 1.1-1.4: Robotergetriebe
- 2: Achse
- 3: Achse
- 4: Drehachse
- 5: Senkrechte
- 6: Getriebegehäuse
- 7: Druckausgleichsbehälter
- 8: Nachgiebiges Trennelement
- 9: Schmiermittelseite
- 10: Gasseite
- 11: Druckausgleichelement
- 12: Gewebemembran
- 13: Startpunkt
- 14: Lackierroboter
- 15: Achse 1
- 16: Achse 2
- 17: Achse 3
- 18: Roboterhandachse
- 19: Rotationszerstäuber

## Patentansprüche

1. Roboter (14), insbesondere Lackierroboter (14) oder Handhabungsroboter einer Lackieranlage zur Lackierung von Kraftfahrzeugkarosseriebauteilen, mit
a) mehreren Robotergetrieben (1, 1.1-1.4), mit jeweils
a1) einem Getriebegehäuse (6), das im Betrieb mindestens teilweise mit einem Schmiermittel mit einem betriebsabhängigen Schmiermitteldruck gefüllt ist, um das Robotergetriebe (1, 1.1-1.4) zu schmieren, und
a2) einem bauartbedingten Druckmaximum für den Schmiermitteldruck, wobei das Getriebegehäuse (6) undicht wird, wenn der Schmiermitteldruck in dem Getriebegehäuse (6) das Druckmaximum überschreitet, sowie
b) einer Druckausgleichseinrichtung (7-12), die fluidisch mit den Robotergetrieben (1, 1.1-1.4) des Roboters (14) verbunden ist und in jedem der Robotergetriebe (1, 1.1-1.4) einen Druckausgleich bewirkt und dadurch verhindert, dass der Schmiermitteldruck in den Getriebegehäuse (6) der Robotergetriebe (1, 1.1-1.4) das Druckmaximum überschreitet.

2. Roboter (14) nach Anspruch 1, **dadurch gekennzeichnet, dass** die Druckausgleichseinrichtung (7-12) einen Druckausgleichsbehälter (7) aufweist, der fluidisch mit den Getriebegehäusen (6) verbunden ist und in den sich das Schmiermittel bei einer Erwärmung ausdehnen kann.

3. Roboter (14) nach Anspruch 2,
**dadurch gekennzeichnet,**
a) **dass** der Druckausgleichsbehälter (7) ein nachgiebiges Trennelement (8) aufweist, und
b) **dass** das Trennelement (8) in dem Druckausgleichsbehälter (7) eine Schmiermittelseite (9) von einer Gasseite (10) trennt und die Schmiermittelseite (9) gegenüber der Gasseite (10) abdichtet, und
c) **dass** die Schmiermittelseite (9) des Druckausgleichsbehälters (7) fluidisch mit dem jeweiligen Getriebegehäuse (6) verbunden ist, und
d) **dass** der Druckausgleichsbehälter (7) auf der Schmiermittelseite (9) mit dem Schmiermittel gefüllt ist, und
e) **dass** die Gasseite (10) des Druckausgleichsbehälters (7) fluidisch mit einer Umgebungsatmosphäre verbunden ist, und
f) **dass** der Druckausgleichsbehälter (7) auf der Gasseite (10) mit Luft gefüllt ist.

4. Roboter (14) nach Anspruch 3,
**dadurch gekennzeichnet,**
a) **dass** die Gasseite (10) des Druckausgleichsbehälters (7) über eine Außenöffnung mit der Umgebungsatmosphäre verbunden ist, und
b) **dass** die Außenöffnung des Druckausgleichsbehälters (7) durch ein Druckausgleichselement (11, 12) verschlossen ist, und
c) **dass** das Druckausgleichselement (11, 12) gasdurchlässig ist, um den Druckausgleich zwischen dem jeweiligen Getriebegehäuse (6) und der Umgebungsatmosphäre zu ermöglichen, und
d) **dass** das Druckausgleichselement (11, 12) für das Schmiermittel undurchlässig ist, um eine Leckage des Schmiermittels auch bei einem Versagen des Trennelements (8) zwischen der Schmiermittelseite (9) und der Gasseite (10) des Druckausgleichsbehälters (7) zu vermeiden.

5. Roboter (14) nach Anspruch 4,
**dadurch gekennzeichnet,**
a) **dass** das Druckausgleichselement (11, 12) so beschaffen ist, dass eine getriebeseitige Schmiermittelbeaufschlagung an dem Druckausgleichselement (11, 12) von außen visuell erkennbar ist, und/oder
b) **dass** das Druckausgleichselement (11, 12) eine elastisch Membran (12) ist, und/oder
c) **dass** die Membran (12) aus Gewebe besteht, und/oder
d) **dass** die Membran (12) durchsichtig ist, so dass bei einem Versagen des Trennelements (8) in dem Druckausgleichsbehälter (7) zwischen der Schmiermittelseite (9) und der Gasseite (10) eine leckagebedingte Schmiermittelbeaufschlagung der Membran (12) visuell erkennbar ist, und/oder
e) **dass** das Druckausgleichselement (11, 12) bidirektional gasdurchlässig ist, um sowohl bei einer Abkühlung des Schmiermittels als auch bei einer Erwärmung des Schmiermittels einen Druckausgleich zu ermöglichen.

6. Roboter (14) nach einem der Ansprüche 3 bis 5, **dadurch gekennzeichnet, dass**
a) dass das Trennelement (8) in dem Druckausgleichsbehälter (7) zwischen der Schmiermittelseite (9) und der Gasseite (10) eine elastische Membran ist, und/oder
b) dass das Trennelement (8) in dem Druckausgleichsbehälter (7) zwischen der Schmiermittelseite (9) und der Gasseite (10) bidirektional nachgiebig ist, um sowohl bei einer Abkühlung des Schmiermittels als auch bei einer Erwärmung des Schmiermittels einen Druckausgleich zu ermöglichen.

7. Roboter (14) nach einem der Ansprüche 3 bis 6, **dadurch gekennzeichnet,**
a) **dass** das Schmiermittel ein temperaturabhängiges Ausdehnungsvolumen aufweist, das mit der Schmiermitteltemperatur zunimmt, und
b) **dass** das Trennelement (8) in dem Druckausgleichsbehälter (7) bauartbedingt ein bestimmte maximales Hubvolumen aufweist, und
c) **dass** das Hubvolumen des Trennelements (8) größer ist als das Ausdehnungsvolumen des Schmiermittels bei einer Schmiermitteltemperatur von 50°C, 60°C, 70°C oder 80°C.

8. Roboter (14) nach einem der vorhergehenden Ansprüche, **dadurch gekennzeichnet,**
a) **dass** das jeweilige Getriebegehäuse (6) ein bauartbedingtes Druckminimum aufweist, wobei das jeweilige Getriebegehäuse (6) undicht wird, wenn der Schmiermitteldruck in dem jeweiligen Getriebegehäuse (6) das Druckminimum unterschreitet, und
b) **dass** die Druckausgleichseinrichtung (7-12) auch verhindert, dass der Schmiermitteldruck in dem jeweiligen Getriebegehäuse (6) das Druckminimum unterschreitet.

9. Roboter (14) nach einem der vorhergehenden Ansprüche, **dadurch gekennzeichnet,**
a) **dass** das jeweilige Getriebegehäuse (6) zu mindestens 85%, 90%, 95% oder sogar vollständig mit dem Schmiermittel gefüllt ist, und/oder
b) **dass** das jeweilige Getriebegehäuse (6) so weit mit dem Schmiermittel gefüllt ist, dass alle Schmierstellen in dem Robotergetriebe (1, 1.1-1.4) unabhängig von der räumlichen Lage des Robotergetriebes (1, 1.1-1.4) unterhalb des Schmiermittelpegels liegen, und/oder
c) **dass** das Druckmaximum des jeweiligen Getriebegehäuses (6) bezogen auf einen Atmosphärendruck kleiner ist als +0,3bar, +0,2bar oder +0,1bar, und/oder
d) **dass** das Druckminimum des jeweiligen Getriebegehäuses (6) bezogen auf einen Atmosphärendruck kleiner ist als -0,3bar, -0,2bar oder -0,1bar, und/oder
e) **dass** das Schmiermittel ein flüssiges Getriebeöl ist, und/oder
f) **dass** der Druckausgleichsbehälter (7) ein Volumen von weniger als 200cm³, 100cm³, 50cm³ oder weniger als 30cm³ aufweist, und/oder
g) **dass** die Druckausgleichseinrichtung (7-12) für das Schmiermittel undurchlässig ist.

10. Roboter (14) nach einem der vorhergehenden Ansprüche, **dadurch gekennzeichnet, dass** die Druckausgleichseinrichtung (7-12) innerhalb des Roboters (14) angeordnet ist, insbesondere in einem Drehgelenk des Roboters (14). * * * * *

## Claims

1. Robot (14), particularly painting robot (14) or handling robot of a painting installation for painting motor vehicle body components, with
a) several gear boxes (1, 1.1-1.4), each with
a1) a gear box housing (6) which is filled at least in part during operation with a lubricant with an operation-dependent lubricant pressure in order to lubricate the robot gear (1, 1.1-1.4), and
a2) a pressure maximum for the lubricant pressure depending on the construction and design, wherein the gear box (6) is leaky when the lubricant pressure in the gear box (6) exceeds the pressure maximum, and
b) a pressure compensation device (7-12), which is fluidically connected with the robot gears (1, 1.1-1.4) of the robot (14) and effects a pressure compensation in each of the robot gears (1, 1.1-1.4) and thereby prevents that the lubricant pressure in the gear box (6) exceeds the pressure maximum.

2. Robot (14) according to claim 1, **characterized in that** the pressure compensation device (7-12) has a pressure compensation vessel (7), which is fluidically connected with the gear boxes (6) and into which the lubricant can expand in the event of heating.

3. Robot (14) according to claim 2,
**characterized in that**
a) the pressure compensation vessel (7) has a resilient separation element (8), and
b) the separation element (8) separates a lubricant side (9) from a gas side (10) in the pressure compensation vessel (7) and seals the lubricant side (9) with respect to the gas side (10), and
c) the lubricant side (9) of the pressure compensation vessel (7) is fluidically connected with the respective gear box (6), and
d) the pressure compensation vessel (7) is filled with the lubricant on the lubricant side (9), and
e) the gas side (10) of the pressure compensation vessel (7) is fluidically connected with an ambient atmosphere, and
f) the pressure compensation vessel (7) is filled with air on the gas side (10).

4. Robot (14) according to claim 3,
**characterized in that**
a) the gas side (10) of the pressure compensation vessel (7) is connected with the ambient atmosphere through an external opening, and
b) the external opening of the pressure compensation vessel (7) is closed bv a pressure compensation element (11, 12), and
c) the pressure compensation element (11, 12) is gas-permeable in order to allow the pressure compensation between the respective gear box (6) and the ambient atmosphere, and
d) the pressure compensation element (11, 12) is impermeable for the lubricant in order to prevent leakage of the lubricant even in case of failure of the separation element (8) between the lubricant side (9) and the gas side (10) of the pressure compensation vessel (7).

5. Robot (14) according to claim 4,
**characterized in that**
a) the pressure compensation element (11, 12) is realized such that a gearbox-side lubricant impingement at the pressure compensation element (11, 12) is visually recognizable from the outside, and/or
b) the pressure compensation element (11, 12) is an elastic membrane (12), and/or
c) the membrane (12) consists of a woven fabric, and/or
d) the membrane (12) is transparent so that, in the case of a failure of the separation element (8) in the pressure compensation vessel (7) between the lubricant side (9) and the gas side (10), a lubricant impingement of the membrane (12) due to leakage is visually recognizable, and/or
e) the pressure compensation element (11, 12) is bidirectionally gas-permeable in order to allow pressure compensation both for cooling of the lubricant and also for heating of the lubricant.

6. Robot (14) according to any one of the claims 3 to 5, **characterized in that**
a) the separation element (8) in the pressure compensation vessel (7) between the lubricant side (9) and the gas side (10) is an elastic membrane, and/or
b) the separation element (8) in the pressure compensation vessel (7) between the lubricant side (9) and the gas side (10) is bidirectionally resilient in order to allow pressure compensation both for cooling of the lubricant and also for heating of the lubricant.

7. Robot (14) according to any one of the claims 3 to 6, **characterized in that**
a) the lubricant has a temperature-dependent expansion volume, which increases with the lubricant temperature, and
b) the separation element (8) in the pressure compensation vessel (7) has a specific maximum displacement due to the construction and design, and
c) the displacement of the separation element (8) is greater than the expansion volume of the lubricant for a lubricant temperature of 50°C, 60°C, 70°C or 80°C.

8. Robot (14) according to any one of the preceding claims, **characterized in that**
a) the respective gear box (6) has a pressure minimum depending on the construction and design, wherein the respective gear box (6) is leaky when the lubricant pressure in the respective gear box (6) falls below the pressure minimum, and
b) the pressure compensation device (7-12) also prevents that the lubricant pressure in the respective gear box (6) falls below the pressure minimum.

9. Robot (14) according to any one of the preceding claims, **characterized in that**
a) the respective gear box (6) is filled to at least 85%, 90%, 95% or even completely with the lubricant, and/or
b) the respective gear box (6) is filled with the lubricant to such an extent that all lubrication points in the robot gear (1, 1.1-1.4) are located below the lubricant level independently of the spatial position of the robot gear (1, 1.1-1.4), and/or
c) the pressure maximum of the respective gear box (6) is, with reference to an atmospheric pressure, smaller than +0.3 bar, +0.2 bar or +0.1 bar, and/or
d) the pressure minimum of the respective gear box (6) is, with reference to an atmospheric pressure, smaller than -0.3 bar, -0.2 bar or -0.1 bar, and/or
e) the lubricant is a liquid gear oil, and/or
f) the pressure compensation vessel (7) has a volume of less than 200 cm³, 100 cm³, 50 cm³ or less than 30 cm³, and/or
g) the pressure compensation device (7-12) is impermeable for the lubricant.

10. The robot (14) according to any one of the preceding claims, **characterized in that** the pressure compensation device (7-12) is arranged inside the robot (14), in particular in a swivel joint of the robot (14). * * * * *

## Revendications

1. Robot (14), plus particulièrement robot de peinture (14) ou robot de manipulation d'une installation de peinture pour la peinture de composants de carrosserie de véhicule, avec
a) plusieurs transmissions de robots (1, 1.1-1.4), comprenant chacune
a1) un carter de transmission (6), qui, lors du fonctionnement, est rempli au moins partiellement avec un lubrifiant avec une pression du lubrifiant dépendant du fonctionnement, afin de lubrifier la transmission du robot (1, 1.1-1.4) et
a2) un maximum de pression spécifique de la conception pour la pression du lubrifiant, le carter de transmission (6) devenant non étanche lorsque la pression du lubrifiant dans le carter de transmission (6) dépasse le maximum de pression, ainsi qu'un dispositif d'équilibrage de pression (7-12), qui est connecté de manière fluidique avec les transmissions de robot (1, 1.1-1.4) du robot (14) et provoque un équilibrage de pression et empêche que la pression du lubrifiant dans le carter de transmission (6) des transmissions de robots (1, 1.1-1.4) dépasse le maximum de pression.

2. Robot (14) selon la revendication 1, **caractérisé en ce que** le dispositif d'équilibrage de pression (7-12) comprend un récipient d'équilibrage de pression (7) qui est connecté de manière fluidique avec les carters de transmission (6) et dans lequel le lubrifiant peut se dilater lors d'un échauffement.

3. Robot (14) selon la revendication 2,
**caractérisé en ce que**
a) le récipient d'équilibrage de pression (7) comprend un élément de séparation flexible (8) et
b) l'élément de séparation (8) dans le récipient d'équilibrage de pression (7) séparer un côté lubrifiant (9) d'un côté gaz (10) et étanchéifie le côté lubrifiant (9) par rapport au côté gaz (10) et
c) le côté lubrifiant (9) du récipient d'équilibrage de pression (7) est connecté de manière fluidique avec le carter de transmission (6) correspondant et
d) le récipient d'équilibrage de pression (7) est rempli de lubrifiant sur le côté lubrifiant (9) et
e) le côté gaz (10) du récipient d'équilibrage de pression (7) est connecté de manière fluidique avec une atmosphère environnante et
f) le récipient d'équilibrage de pression (7) est remplie d'air du côté gaz (10).

4. Robot (14) selon la revendication 3,
**caractérisé en ce que**
a) le côté gaz (10) du récipient d'équilibrage de pression (7) est relié à l'atmosphère environnante par l'intermédiaire d'une ouverture extérieure et
b) l'ouverture extérieure du récipient d'équilibrage de pression (7) est obturée par un élément d'équilibrage de pression (11, 12) et
c) l'élément d'équilibrage de pression (11, 12) est perméable aux gaz afin de permettre un équilibrage de pression entre le carter de transmission (6) correspondant et l'atmosphère environnante et
d) l'élément d'équilibrage de pression (11, 12) est imperméable au lubrifiant afin d'éviter une fuite de lubrifiant même lors d'une défaillance de l'élément de séparation (8) entre le côté lubrifiant (9) et le côté gaz (10) du récipient d'équilibrage de pression (7).

5. Robot (14) selon la revendication 4,
**caractérisé en ce que**
a) l'élément d'équilibrage de pression (11, 12) est conçu de façon à ce qu'une alimentation en lubrifiant côté lubrifiant soit visible de l'extérieur sur l'élément d'équilibrage de pression (11, 12) et/ou
b) l'élément d'équilibrage de pression (11, 12) est une membrane élastique (12) et/ou
c) la membrane (12) est constituée d'un tissu et/ou
d) la membrane (12) est transparente, de façon à ce que, lors d'une défaillance de l'élément de séparation (8), une alimentation en lubrifiant, due à une fuite, de la membrane (12) est visible dans le récipient d'équilibrage de pression (7) entre le côté lubrifiant (9) et le côté gaz (10), et/ou
e) l'élément d'équilibrage de pression (11, 12) est perméable aux gaz de manière bidirectionnelle afin de permettre un équilibrage de pression aussi bien lors d'un refroidissement du lubrifiant que lors d'un échauffement du lubrifiant.

6. Robot (14) selon l'une des revendications 3 à 5, **caractérisé en ce que**
a) l'élément de séparation (8) est une membrane élastique dans le récipient d'équilibrage de pression (7) entre le côté lubrifiant (9) et le côté gaz (10) et/ou
b) l'élément de séparation (8) est flexible de manière bidirectionnelle dans le récipient d'équilibrage de pression (7) entre le côté lubrifiant (9) et le côté gaz (10) afin de permettre un équilibrage de pression aussi bien lors d'un refroidissement du lubrifiant que lors d'un échauffement du lubrifiant.

7. Robot (14) selon l'une des revendications 3 à 6, **caractérisé en ce que**
a) le lubrifiant présente un volume de dilatation dépendant de la température qui augmente avec la température du lubrifiant et
b) l'élément de séparation (8) dans le récipient d'équilibrage de pression (7) présente un volume maximal déterminé dépendant de la conception et
c) la cylindrée de l'élément de séparation (8) est supérieure au volume de dilatation du lubrifiant dans le cas d'une température de lubrifiant de 50 °C, 60 °C, 70 °C ou 80 °C.

8. Robot (14) selon l'une des revendications précédentes, **caractérisé en ce que**
a) le carter de transmission (6) correspondant présente un minimum de pression dépendant de la conception, le carter de transmission (6) devenant non étanche lorsque la pression de lubrifiant dans le carter de transmission (6) tombe en dessous du minimum de pression et
b) le dispositif d'équilibrage de pression (7-12) empêche également que la pression du lubrifiant dans le carter de lubrifiant (6) correspondant tombe en dessous du minimum de pression.

9. Robot (14) selon l'une des revendications précédentes, **caractérisé en ce que**
a) le carter de transmission (6) correspondant est rempli à au moins 85 %, 90 %, 95 % voire entièrement de lubrifiant et/ou
b) le carter de transmission (6) correspondant est rempli de lubrifiant jusqu'à ce que tous les points de lubrification de la transmission de robot (1, 1.1-1.4) se trouvent en dessous du niveau de lubrifiant quelle que soit la position spatiale de la transmission de robot (1, 1.1-1.4) et/ou
c) le maximum de pression du carter de transmission (6) correspondant par rapport à une pression atmosphérique est inférieur à +0,3 bar, +0,2 bar ou +0,1 bar et/ou
d) le minimum de pression du carter de transmission (6) correspondant par rapport à une pression atmosphérique est inférieur à -0,3 bar, -0,2 bar ou -0,1 bar et/ou
e) le lubrifiant est une huile de transmission liquide et/ou
f) le récipient d'équilibrage de pression (7) présente un volume inférieur à 200 cm³, 100 cm³, 50 cm³ ou inférieur à 30 cm³, et/ou
g) le dispositif d'équilibrage de pression (7-12) est imperméable au lubrifiant.

10. Robot (14) selon l'une des revendications précédentes, **caractérisé en ce que** le dispositif d'équilibrage de pression (7-12) est disposé à l'intérieur du robot (14), plus particulièrement dans une articulation rotative du robot (14).
